# EUROPÄISCHE PATENTSCHRIFT

(11) **EP 1 277 998 B1**
(45) Veröffentlichungstag und Bekanntmachung des Hinweises auf die Patenterteilung: **22.06.2005**
(21) Anmeldenummer: 02016256.6
(22) Anmeldetag: 22.07.2002
(51) Int. Cl.: F16K 17/04, F16K 17/08

(54) **Sicherheitsventil**
Safety valve
Soupape à sécurité

(30) Priorität: 20.07.2001 DE 10135578
(43) Veröffentlichungstag der Anmeldung: 22.01.2003
(73) Patentinhaber: A. Kayser Automotive Systems GmbH, 37574 Einbeck (DE)
(72) Erfinder: Landmann, Wolfgang, 37557 Einbeck (DE); Bretthauer, Dirk, 37557 Einbeck (DE)
(74) Vertreter: Müller-Boré & Partner Patentanwälte

(56) Entgegenhaltungen:
- EP-A- 0 611 219
- DE-B- 1 239 899
- DE-C- 887 738
- FR-A- 2 105 898

## Beschreibung

Die Erfindung betrifft ein Steuerventil bzw. ein Überdruckventil, insbesondere in Form eines Schubumluftventils zum Abbau eines auf einer Seite des Steuerventils entstehenden Überdrucks, wie es im Anspruch 1 beschrieben ist.

Bei Steuerventilen werden zum dichtenden Verschließen der Einlaß- und Auslaßseite des Ventils häufig Dichteinrichtungen aus elastischem Material eingesetzt. Das elastische Material kann dazu beispielsweise aus einer Membran bestehen. Im geschlossenen Zustand liegt dabei das elastische Dichtungselement dichtend auf einem Ventilsitz an und ist so ausgebildet, daß es zum Öffnen des Ventils vom Ventilsitz wegbewegt werden kann. Soll beispielsweise ein auf der Einlaßseite des Ventils anstehender Überdruck durch das Ventil hindurch zur Auslaßseite des Ventils abgeführt werden, muß sich die Membran vom Ventilsitz wegbewegen, wodurch es zu einer Strömung zwischen Ventilsitz und Membran kommt.

Es wurde festgestellt, daß sich beim Öffnen des Ventils Geräusche ergeben. Die Geräusche entstehen durch die im Bereich zwischen der Membran und dem Ventilsitz sich ergebenden Bernoulli-Strömung und die daraus entstehenden Unterdruckverhältnisse. Der Unterdruck bewirkt dabei, daß das elastische Dichtungselement, also beispielsweise die Membran, zum Ventilsitz hin zurückgezogen wird und das Ventil - trotz Öffnungsstellung - wieder kurzzeitig verschließt. Dieser Vorgang des sich wieder kurzzeitigen Verschließens mit anschließendem kurzfristigen Öffnen des Ventils erfolgt am Beginn des Öffnens des Ventils und erzeugt die zuvor erwähnten Geräusche.

EP 0 611 219 B1 offenbart ein Ventil mit einer Dichtungseinrichtung in Form einer Membran, die zum Abdichten als ein elastisches Dichtelement auf einem Ventilsitz aufliegt und gleichzeitig einen Betätigungsmechanismus des Ventils gegenüber der Strömungsbahn des Ventils abdichtet.

DE 1 239 899 offenbart ein Membranventil mit einem auswechselbaren Drosselkegel, mit dem eine Drosselwirkung an jeweilige Betriebsverhältnisse angepaßt werden kann.

Es ist Aufgabe der vorliegenden Erfindung, ein Steuerventil vorzugschlagen, bei welchem eine Geräuschbildung des Ventils beim Öffnungsvorgang verhindert

Die Aufgabe wird mit einem Steuerventil bzw. einem Überdruckventil gelöst, welches die im Anspruch 1 angegebenen Merkmale aufweist.

Um zu verhindern, daß sich das Ventil zu Beginn des Öffnungszustandes wieder verschließt, weist das Steuerventil einen Ventileinsatz auf, der über eine erste Strecke der Öffnungsbewegung des Ventils den unmittelbaren Beginn einer sich einstellenden Strömung verhindert, zumindest jedoch nur eine Strömung in einer solch geringen Form zuläßt, daß ein "Zurückschlagen" des elastischen Dichtungselementes zum Ventilsitz hin verhindert werden kann. Dazu ist der Ventileinsatz - sowie auch das elastische Dichtungselement - als am Ventilsitz zumindest teilweise wirkende zusätzliche Dichtungseinrichtung ausgebildet. In der Folge kann sich das elastische Dichtungselement zunächst wegbewegen, also in einen Öffnungszustand gebracht werden, ohne daß es dabei sofort zu einer starken Strömung im Bereich des Ventilsitzes kommt. Der Ventileinsatz, der mit dem elastischen Dichtungselement verbunden ist, kann dabei vorzugsweise so ausgebildet sein, daß ein sich Einstellen einer Strömung sogar vollständig verhindert wird. Es kann aber auch zugelassen werden, daß die dichtende Wirkung des Ventileinsatzes eine zunächst geringere Strömung zuläßt, deren Unterdruckverhältnisse dergestalt sind, daß die elastische Dichtungseinrichtung, selbst wenn sie nur ein wenig vom Ventilsitz wegbewegt wird, keinesfalls auf diesen durch den Unterdruck zurückgezogen werden kann. Abhängig von den Dimensionen des betreffenden Steuerventils und der anstehenden Druckverhältnisse sowie der verwendeten Materialien muß dabei das elastische Dichtungselement nur über einen kurzen oder einen entsprechend längeren Hub wegbewegt werden, bevor eine vollständige Strömung, also das eigentliche Öffnen des Steuerventils erfolgt. Um das Öffnen des Steuerventils zuzulassen, schießt sich dabei an den als zusätzliche Dichteinrichtung wirkenden ersten Abschnitt des Ventileinsatzes ein Abschnitt an, der den Strömungsweg bzw. - querschnitt freigibt und als Führung des Ventilsitzes bzw. der Dichtungseinrichtung dient. Somit ist sichergestellt, daß der sich im Bereich zwischen dem elastischen Dichtungselement und dem Ventilsitz nach Freigabe des Strömungsweges einstellende Unterdruck es nicht mehr bewirken kann, daß das elastische Dichtungselement in jeder vom Ventilsitz beabstandeten Stellung wieder auf diesen zurückgezogen werden kann.

Mit dem vorgeschlagenen Ventileinsatz entsteht ein Ventil mit zwei unterschiedlichen Funktionen zur Regulierung einer Strömung, nämlich ein Schieberventil kombiniert mit einem Membranventil.

In einer bevorzugten Ausführungsform ist der, die zusätzliche Dichtungseinrichtung bildende erste Abschnitt des Ventileinsatzes mit einem, sich in Richtung der Längsachse des Ventileinsatzes erstreckenden, Randbereich ausgebildet. Der Randbereich, der sich dabei, wiederum u.a. abhängig von Baugrößen und Druckverhältnissen, über einen kürzeren oder längeren Bereich erstrecken kann, liegt dabei entweder am Ventilsitz an, um eine sich einstellende Strömung zunächst ganz zu verhindern oder ist von diesem gering beabstandet, um eine Strömung zumindest nur in einem geringen Maß zuzulassen.

Zweckmäßigerweise kann der Ventileinsatz im Querschnitt kreisförmig ausgebildet sein, was hinsichtlich der angestrebten Dichtwirkung zwischen dem Ventileinsatz und dem Ventilsitz von Vorteil ist. Das Zulassen einer geringen Strömung kann beispielsweise durch einen ringförmigen Spalt zwischen Ventilsitz und Randbereich ermöglicht werden.

In einer bevorzugten Ausführungsform kann dabei der erste Abschnitt des Ventileinsatzes als hohlzylinderförmiger Kreisring ausgebildet sein, was hinsichtlich Herstellung und Elastizität im Bereich des ersten Abschnittes sowie hinsichtlich einer Materialersparnis vorteilhaft ist.

Zweckmäßigerweise kann am freien Ende des ersten Abschnittes des Ventileinsatzes, welcher dem elastischen Dichtungselement zugewandt ist, ein sich radial nach innen erstreckender weiterer Kreisring angeordnet sein, dessen Erstreckung in Richtung der Längsachse des Ventileinsatzes geringer ist als die des ersten Abschnittes. Dieser weitere Kreisring kann dabei vorzugsweise als Auflage für einen Bereich des mit dem Ventileinsatz verbundenen elastischen Dichtungselementes dienen und erhöht insbesondere die Stabilität des Ventileinsatzes.

In einer bevorzugten Ausführungsform ist der zweite Abschnitt des Ventileinsatzes als sich in Richtung der Längsachse des Ventileinsatzes erstreckende, voneinander beabstandeten Stege bzw. Arme ausgebildet. Eine solche Konfirguration des zweiten Abschnittes dient einmal dazu, den Ventileinsatz weiterhin als Führungselement für die Dichtungseinrichtung verwenden zu können und es andererseits zu ermöglichen, den Strömungsquerschnitt, zumindest teilweise, freizugeben. Aus Stabilitätsgründen sind dabei vorzugsweise drei oder mehr Stege vorhanden.

Vorteilhafterweise ist der Abstand zwischen den Stegen, in deren Längsachsenrichtung gesehen, unterschiedlich, vorzugsweise im Bereich des ersten Abschnittes geringer als in dem Bereich hin zu den freien Enden der Stege. In einem ersten Bereich, in welchem der Ventileinsatz soweit weg bewegt ist, daß sich eine Strömung zwischen den Stegen einstellen kann, kann diese so reguliert werden, daß sich zu Beginn eine geringere Strömung wegen des verringerten Strömungsquerschnittes einstellt als im weiteren Öffnungsverlauf, d.h. beim weiteren Wegbewegen des Ventileinsatzes, da in diesem Bereich die Abstände zwischen den Stegen größer werden und somit eine größere Strömung zulassen.

Zweckmäßigerweise sind die Stege vorzugsweise an ihren freien Enden mit sich in Richtung des Ventilsitzes erstreckenden und an diesem anliegenden Auskragungen versehen. Die Anlagefläche zwischen Ventileinsatz und dem entsprechenden Bereich des Ventilsitzes wird somit verringert, was die sich zwischen den Stegen und dem Ventilsitz einstellende Reibung verringert.

In einer weiteren Ausführungsform können die freien Enden der Stege über einen am Ventilsitz anliegenden Kreisring miteinander verbunden sein, was die Stabilität der Stege untereinander erhöht und die Führung des Ventileinsatzes im Ventilsitz verbessert.

Vorteilhafterweise kann das Material des ersten Abschnittes des Ventileinsatzes aus einem anderen Material, vorzugsweise einem elastischen Material, bestehen als das Material des zweiten Abschnittes. Dies kann insbesondere dann von Vorteil sein, wenn eine vollständige oder sehr hohe Dichtwirkung zwischen dem Ventileinsatz und dem Ventilsitz gewünscht ist. Es kann aber auch vollständig ausreichen, den gesamten Ventilsatz aus gleichem Material, beispielsweise aus Kunststoff, herzustellen.

Der zuvor beschriebene Ventileinsatz mit seinen entsprechenden Ausgestaltungen kommt vorzugsweise zur Verwendung in einem Steuerventil, insbesondere einem Abschalt- oder Schubumluftventil.

Die Erfindung wird nachfolgend näher anhand bevorzugter Ausführungsbeispiele beschrieben. Es zeigen dabei:
Fig. 1 einen Querschnitt durch ein Steuerventil,
Fig. 2 eine perspektivische Ansicht einer ersten Ausführungsform des Ventileinsatzes,
Fig. 3a eine perspektivische Ansicht einer weiteren bevorzugten Ausführungsform des Ventileinsatzes, und
Fig. 3b eine Schnittansicht der Ausführungsform von Fig. 3a.

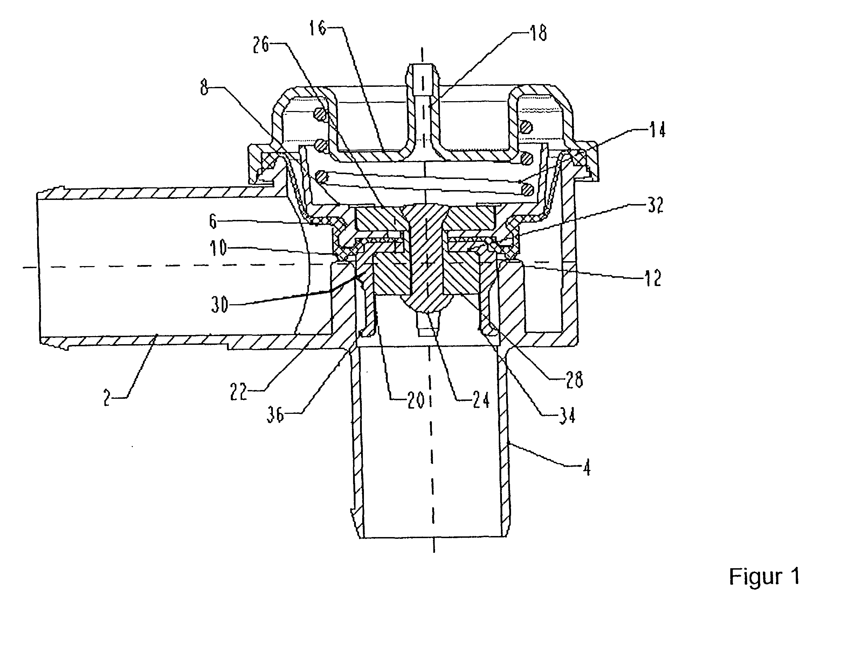

Bei der bevorzugten Ausführungsform gemäß Fig. 1 handelt es sich um ein Schubumluftventil, welches beispielsweise im Turbolader-Luftkreislauf eingebaut sein kann. Zu diesem Zweck ist das Steuerventil auf der Druckseite, d.h. zwischen dem Abgasturbolader und der Drosselklappe angeordnet und schafft eine Verbindung zu der drucklosen Seite vor dem Abgasturbolader. Das gezeigte Schubumluftventil hat dabei die Aufgabe, den Druck, der sich hinter dem Turbolader zur Drosselklappe hin aufbaut, im Falle eines Schubbetriebes, d.h. bei Reduzierung der Motordrehzahl, wie dies beispielsweise beim Auskuppeln der Fall ist, abzubauen. Zum Druckabbau öffnet sich das Schubumluftventil und leitet den Überdruck zwischen Abgasturbolader und Drosselklappe in den vor dem Turbolader angeordneten Reinluftkanal zurück, wodurch ein kurzfristiger Druckausgleich zwischer der Seite vor dem Turbolader und hinter dem Turbolader entsteht. Der zuvor beschriebene Einsatzzweck solcher Schubumluftventile ist grundsätzlich bekannt. Anhand der Fig. 1 soll nun die erfindungsgemäße bevorzugte Ausführungsform eines solchen Schubumluftventils beispielhaft beschrieben werden.

In bekannter Weise weist dabei das als Schubumluftventil dienende Steuerventil einen Einlaßstutzen 2 und einen Auslaßstutzen 4 auf. Zwischen Einlaßstutzen 2 und Auslaßstutzen 4 ist eine Dichtungseinrichtung angeordnet, die einen an sich bekannten Aufbau aufweist. Die Dichtungseinrichtung besteht dabei aus einem elastischen Dichtungselement in Form einer Membran 6, die auf einem Membranaufnehmer 8 angeordnet ist. Die Membran 6 weist einen Dichtungsrand 10 auf, der auf einem Ventilsitz 12 in der geschlossenen Stellung des Ventils aufliegt. Der Ventilsitz 12 ist dabei als Fortführung des Auslaßstutzens 4 ausgebildet und weist einen kreisförmigen Querschnitt auf. In der Folge ist auch der Dichtungsrand 10 der Membran 6 ringkreisförmig ausgebildet. Oberhalb der Membran 6 und somit abgewandt vom Auslaßstutzen 4 ist die Membran 6 mit einer Schraubenfeder 14 beaufschlagt, wobei die Schraubenfeder 14 mit dem einen Ende am Membranaufnehmer 8 anliegt und mit dem anderen Ende in einem Ventilgehäusedeckel 16. Die Kraft der Schraubenfeder 14 drückt die Membran 6 über den Membranaufnehmer 8 mit ihrem Dichtungsrand 10 auf den Ventilsitz 12. Zur Steuerung der Öffnungsbewegung der Dichtungseinrichtung ist im Gehäusedeckel ein Stutzen 18 angeordnet, an den eine Unterdruckquelle angeschlossen werden kann. Sobald ein Unterdruck in dem von der Membran und dem Gehäusedeckel umschlossenen Bereich anliegt, kann die Dichtungseinrichtung und somit die Membran 6 gegen die Kraft der Schraubenfeder 14 vom Ventilsitz 12 wegbewegt werden, um einen Durchgang zwischen dem Einlaßstutzen 2 und dem Auslaßstutzen 4 zu ermöglichen.

Zur Führung der Dichtungseinrichtung ist ein Ventileinsatz 20 vorgesehen, der sich in dem als rohrförmigen Ansatzstutzen 22 des Auslaßstutzens 4 ausgebildeten Ventilsitz 12 an dessen Innenwandung bereichsweise abstützt. Der Ventileinsatz 20 ist mit der Membran 6 und dem Membranaufnehmer 8 über eine Niete 24 verbunden. Dazu ist im Bereich zwischen dem einen Ende der Niete 24 und dem Membranaufnehmer 8 ein Ventilteller 26 in dem Membranaufnehmer 8 angeordnet und am anderen freien Ende der Niete 24 befindet sich ein als Zusatzgewicht 28 ausgebildetes Teil, welches im inneren Bereich des Ventileinsatzes 20 gelagert ist. Um die Niete 24 anzuordnen, weisen der Ventilteller 26, der Membranaufnehmer 8, die Membran 6 sowie auch der Ventileinsatz 20 eine entsprechende Ausnehmung auf. Durch das Verbinden der Dichtungseinrichtung mit dem Ventileinsatz 20 über die Niete 24 folgt der Ventileinsatz 20 den Bewegungen der Dichtungseinrichtung, also der Membran 6 und dem Membranaufnehmer 8 gegen die Kraft der Schraubenfeder 14.

Der Ventileinsatz 20 besteht aus einem, der Membran 6 zugewandten ersten Abschnitt in Form eines ringkreisförmigen Randbereiches 30, der mit seinem äußeren Umfang an dem Innenumfang des Ansatzstutzens 22 anliegen kann oder gering von diesem - einen Ringspalt bildend - beabstandet ist.

Zur Niete 24 hin ist an den Randbereich 30 ein weiterer, sich radial nach innen erstreckender und mit dem Randbereich 30 einstückig verbundener Kreisring 32 ausgebildet, der in der Mitte eine Ausnehmung für den Durchtritt eines Teiles des Gewichtes 28 und der Niete 24 aufweist. An den Randbereich 30 des ersten Abschnittes des Ventileinsatzes 20 schließen sich in Richtung des Auslaßstutzens 4 erstreckende krallenförmige Arme 34 einstückig an, wobei in der in Figur 1 gezeigten Ausführungsform des Ventileinsatzes 20 drei solche Arme 34 gezeigt sind. Die Arme 34, die auch als krallenförmige Zentrierarme bezeichnet werden können, dienen der Führung des Ventileinsatzes 20 und somit als Führung der elastischen Dichteinrichtung, insbesondere dann, wenn sich die Membran 6 soweit vom Ventilsitz 12 entfernt hat, daß der Randbereich 30 des Ventileinsatzes 20 nicht mehr in Kontakt mit der Innenwandung des Ventilsitzes 12 bzw. des Ansatzstutzens 22 befindet. Als Führungselement sind dazu die freien Enden der Arme 34 mit sich quer zur Längsachse des Auslaßstutzens 4 erstreckenden Auskragungen 36 versehen. Der Randbereich 30 ist so ausgebildet, daß er nicht nur dann, wenn sich die Membran 6 auf dem Ventilsitz 12 befindet, dichtend bzw. teilweise dichtend an der Innenseite des Ansatzstutzens 22 befindet, sondern auch dann, wenn sich die Membran 6 bzw. der Dichtungsrand 10 der Membran 6 vom Ventilsitz 12 entgegen der Kraft der Schraubenfeder 14 wegbewegt hat. Erst nachdem sich der Dichtungsrand 10 um eine bestimmte Strecke vom Ventilsitz 12 entfernt hat, tritt auch der äußere Umfang des Randbereiches 30 des Ventileinsatzes 20 aus der Innenwandung des Ansatzstutzens 22 heraus und gibt somit den sich zwischen den Armen 34 enstehenden Raum als Strömungsquerschnitt frei.

Durch diese Ausbildung des Ventileinsatzes 20 wird es verhindert, daß sich sofort nach dem Wegbewegen des Dichtungsrandes 10 vom Ventilsitz 12 eine Strömung einstellt, die aufgrund der dann entstehenden Unterdruckverhältnisse zwischen dem Ventilsitz 12 und dem Dichtungsrand 10 der Membran 6 ein Zurückschlagen des Dichtungsrandes 10 der Membran 6 auf den Ventilsitz verursachen könnte. Dadurch werden ungewollte Geräuschbildungen durch ein Zurückschlagen des Dichtungsrandes 10 der Membran 6 im anfänglichen Öffnungszustand des Steuerventils verhindert.

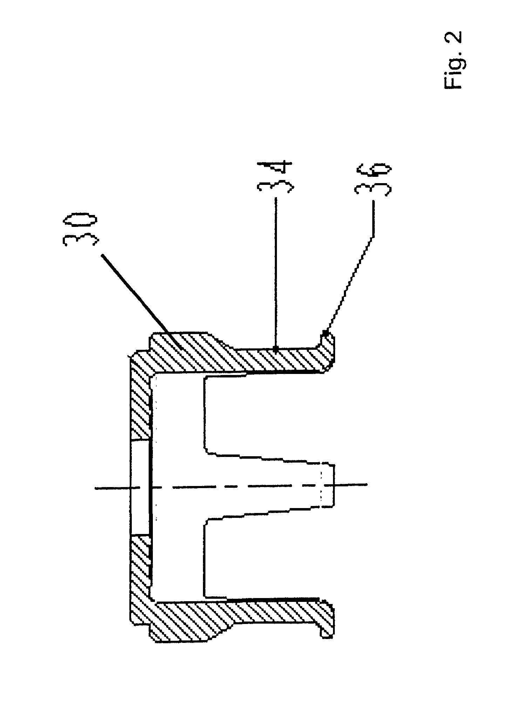

Die Fig. 2 zeigt eine besondere Ausführungsform des Ventileinsatzes 20, die in diesem Fall vier Arme 34 aufweist, die an ihren freien Enden ebenfalls mit Auskragungen 36, wie in Fig. 1 beschrieben, versehen sind. Der Randbereich 30, der den ersten Abschnitt des Ventileinsatzes 20 bildet, schließt sich direkt an den, die freien Armen 34 bildenden zweiten Abschnitt an. Wie auch zu Fig. 1 beschrieben, ist im Inneren des Dichtungsrandes 30 ein als Kreisring 32 ausgebildeter Abschnitt angeordnet, der in der Mitte eine Öffnung zum Durchtritt der Niete 24 bzw. eines Teil des Gewichtes 28 aufweist. Die den zweiten Abschnitt des Ventileinsatzes 20 bildenden Arme 34 sind in ihrem Querschnitt schmäler als der Querschnitt bzw. die Ringkreisdicke des als hohlförmigen Ringkreiszylinders ausgebildeten und die zusätzliche Dichtung erzeugenden Randbereiches 30. Die Abstände zwischen den einzelnen Armen 34 sind bei dem in Fig. 2 gezeigten Ausführungsbeispiel gleich, so daß sich, sobald der äußere Umfang des Randbereiches 30 den Bereich mit der Innenseite des Anlaßstutzens 22 verlassen hat, ein gleichbleibender Strömungsquerschnitt ergibt, egal, wieweit sich der Randbereich 30 vom freien Ende des Ansatzstutzens 22 bzw. vom Ventilsitz 12 wegbewegt. Um den Strömungsquerschnitt abhängig von der Entfernung des Randbereiches 30 vom freien Ende des Ansatzstutzens 22 regulieren zu können, können sich die Abstände zwischen den Armen 34 zum freien Ende der Arme hin gesehen auch vergrößern, indem die Abschnitte beispielsweise trichterförmig ausgebildet sind und ihren größten Abstand im Bereich der freien Ende der Arme 34 haben.

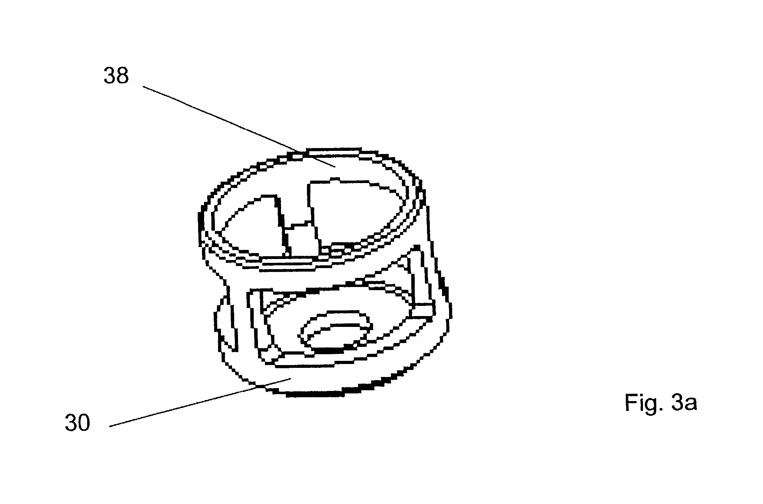

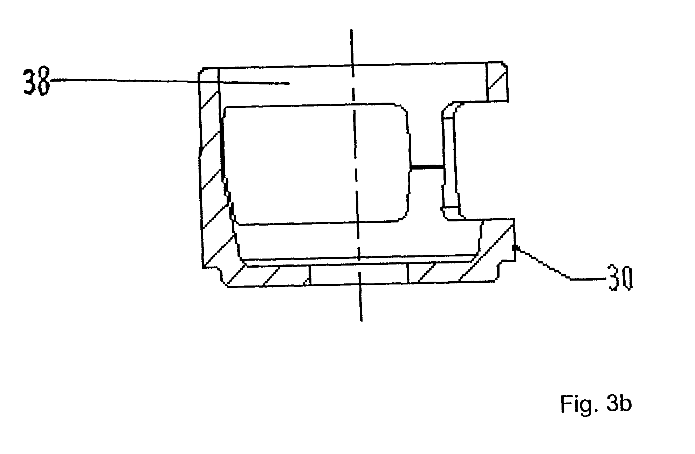

Fig. 3a und 3b zeigen eine weitere bevorzugte Ausführungsform des Ventileinsatzes 20, wobei in diesem Ausführungsbeispiel lediglich drei Arme 34 vorhanden sind, die zudem keine Auskragungen aufweisen, sondern im Bereich ihrer freien Enden über einen ununterbrochenen Kreisring 38 miteinander verbunden sind. Während die in den Figs. 1 und 2 gezeigten Arme 34 lediglich mit ihren Auskragungen 36 an der Innenseite des Ansatzstutzens 22 anliegen, sind die Arme in den Fig. 3a und 3b so ausgebildet, daß sie sich in einer Linie mit dem Randbereich 30 befinden, was auch für den äußeren Randbereich des Kreisringes 38 zutrifft. Somit stehen die äußeren Flächen des Randbereiches 30, der Arme 34 und des Kreisringes 34 in Anlage mit dem Innenumfang des Ansatzstutzens 22 und dienen somit insgesamt als Führung.

### Bezugszeichenliste

- 2: Einlaßstutzen
- 4: Auslaßstutzen
- 6: Membran
- 8: Membranaufnehmer
- 10: Dichtungsrand
- 12: Ventilsitz
- 14: Schraubenfeder
- 16: Ventilgehäusedeckel
- 18: Stutzen
- 20: Ventileinsatz
- 22: rohrförmiger Ansatzstutzen
- 24: Niete
- 26: Ventilteller
- 28: Zusatzgewicht
- 30: Randbereich
- 32: Kreisring
- 34: Arme
- 36: Auskragung
- 38: Kreisring

## Patentansprüche

1. Überdruckventil , insbesondere zum Abbau eines auf einer Seite des Ventils anstehenden Überdrucks,
mit einem Ventilgehäuse, welches wenigstens eine Einlaß (2) und wenigstens eine Auslaßöffnung (4) aufweist,
einer Dichtungseinrichtung mit einem elastischen Dichtungselement, insbesondere in Form einer Membran (6), die in einer Stellung auf einem Ventilsitz (12) dichtend zwischen Einlaß (2) - und Auslaßöffnung (4) angeordnet ist und die gegen eine auf sie wirkende Kraft (14) vom Ventilsitz (12) weg bewegbar ausgebildet ist,
**gekennzeichnet durch**
einen mit der Dichtungseinrichtung (6) verbundenen und als Führungselement für die Dichtungseinrichtung (6) dienenden Ventileinsatz (20), welcher in einem ersten Abschnitt (30) einen ringkreisförmigen Randbereich aufweist, der mit seinem äußeren Umfang an einem Innenumfang eines Ansatzstutzens (22) des Ventilsitzes (12) anliegt oder in dem Ansatzstutzens (22) mit einem geringen Spiel angeordnet ist, und in einem zweiten Abschnitt (34) eine Führung (36) für den Ventileinsatz (20) aufweist.

2. Überdruckventil nach Anspruch 1, bei welchem der erste Abschnitt des Ventileinsatzes mit einem, sich in Richtung seiner Längsachse erstreckenden Randbereich (30) ausgebildet ist, der im Bereich des Ventilsitzes (12) dichtend anliegt oder eine geringere Strömung zulassend, von diesem beabstandet ist.

3. Überdruckventil nach Anspruch 1 oder 2, bei welchem der erste Abschnitt (30) des Ventileinsatzes (20) im Querschnitt kreisförmig ausgebildet ist.

4. Überdruckventil nach einem der Ansprüche 1 bis 3, bei welchem der erste Abschnitt (30) des Ventileinsatzes (20) als hohlzylinderförmiger Kreisring ausgebildet ist.

5. Überdruckventil nach einem der Ansprüche 1 bis 4, wobei am freien Ende des ersten Abschnittes (30) des Ventileinsatzes (20) ein sich radial nach innen erstreckender weiterer Kreisring (32) angeordnet ist, dessen Erstreckung in Richtung der Längsachse des Ventileinsatzes (20) geringer ist als die des ersten Abschnittes (30).

6. Überdruckventil nach einem der Ansprüche 1 bis 5, bei welchem der zweite Abschnitt des Ventileinsatzes (20) als sich in Richtung der Längsachse des Ventileinsatzes (20) erstreckende, voneinander beabstandete Stege (34) ausgebildet ist.

7. Überdruckventil nach Anspruch 6, bei welchem der Abstand zwischen den Stegen (34) im Bereich des ersten Abschnitts (30) geringer ist als im Bereich der freien Enden der Stege (34).

8. Überdruckventil nach Anspruch 6 oder 7, bei welchem die Stege (34) vorzugsweise an ihren freien Enden sich in Richtung des Ventilsitzes (12) erstreckende und im Bereich des Ventilsitzes (12) anliegende Auskragungen (36) aufweisen.

9. Überdruckventil nach einem der Ansprüche 6 bis 8, bei welchem die freien Enden der Stege (34) über einen im Bereich des Ventilsitzes (12) vorzugsweise anliegenden Kreisring (38) miteinander verbunden sind.

10. Überdruckventil nach einem der Ansprüche 1 bis 9, bei welchem der erste Abschnitt (30) des Ventileinsatzes (20) aus einem anderen Material, vorzugsweise einem elastischen Material, besteht als der zweite Abschnitt (34).

11. Überdruckventil nach einem der vorhergehenden Ansprüche zur Verwendung in einem Steuerventil, insbesondere einem Abschalt - oder Schubumluftventil.

## Claims

1. Pressure relief valve, in particular for the reduction of an excess pressure prevailing on one side of the valve, with a valve housing which has at least one inlet (2) and at least one outlet (4) orifice, and with a sealing device having an elastic sealing element, in particular in the form of a diaphragm (6), which in one position is arranged sealingly on a valve seat (12) between the inlet (2) and outlet (4) orifice which is designed to be capable of being moved, counter to a force (14) acting on it, away from the valve seat (12),
**characterized by**
a valve insert (20) which is connected to the sealing device (6) and serves as a guide element for the sealing device (6) and which in a first portion (30) has an annular edge region which bears with its outer circumference against an inner circumference of an extension piece (22) of the valve seat (12) or is arranged with low play in the extension piece (22) and which in a second portion (34) has a guide (36) for the valve insert (20).

2. Pressure relief valve according to Claim 1, in which the first portion of the valve insert is designed with an edge region (30) which extends in the direction of its longitudinal axis and which bears sealingly in the region of the valve seat (12) or is spaced apart from this so as to allow a relatively low flow.

3. Pressure relief valve according to Claim 1 or 2, in which the first portion (30) of the valve insert (20) is of circular design in cross section.

4. Pressure relief valve according to one of Claims 1 to 3, in which the first portion (30) of the valve insert (20) is designed as a hollow-cylindrical annulus.

5. Pressure relief valve according to one of Claims 1 to 4, there being arranged at the free end of the first portion (30) of the valve insert (20) a radially inward-extending further annulus (32), of which the extent in the direction of the longitudinal axis of the valve insert (20) is smaller than that of the first portion (30).

6. Pressure relief valve according to one of Claims 1 to 5, in which the second portion of the valve insert (20) is designed as webs (34) which extend in the direction of the longitudinal axis of the valve insert (20) and are spaced apart from one another.

7. Pressure relief valve according to Claim 6, in which the spacing between the webs (34) is smaller in the region of the first portion (30) than in the region of the free ends of the webs (34).

8. Pressure relief valve according to Claim 6 or 7, in which the webs (34) have, preferably at their free ends, projections (36) which extend in the direction of the valve seat (12) and come to bear in the region of the valve seat (12).

9. Pressure relief valve according to one of Claims 6 to 8, in which the free ends of the webs (34) are connected to one another via an annulus (38) preferably coming to bear in the region of the valve seat (12).

10. Pressure relief valve according to one of Claims 1 to 9, in which the first portion (30) of the valve insert (20) consists of a different material, preferably an elastic material, from the second portion (34).

11. Pressure relief valve according to one of the preceding claims, for use in a control valve, in particular a circulating-air cut-off or overrun valve.

## Revendications

1. Soupape de sécurité, en particulier en vue de la suppression d'une surpression en suspens d'un côté de la soupape, comportant une cage de soupape, laquelle présente au moins un orifice d'admission (2) et au moins un orifice d'évacuation (4), un dispositif d'étanchéité avec un élément d'étanchéité élastique, en particulier sous la forme d'une membrane (6) qui est disposée de manière étanche entre orifice d'admission (2) et orifice d'évacuation (4) dans un emplacement sur un siège de soupape (12) et qui est réalisée mobile depuis le siège de soupape (12) contre une force (14) agissant sur elle, **caractérisée en ce que** une garniture de soupape (20) assemblée avec le dispositif d'étanchéité (6) et servant d'élément de guidage pour le dispositif d'étanchéité (6), laquelle présente une zone périphérique sous forme de couronne annulaire dans une première section (30), ladite zone périphérique étant attenante avec son périmètre extérieur à un périmètre intérieur d'un ajutage (22) du siège de soupape (12) ou étant disposée dans l'ajutage (22) avec un peu de jeu, et présente un guidage (36) pour la garniture de soupape (20) dans une seconde section (34).

2. Soupape de sécurité selon la revendication 1, dans laquelle la première section de la garniture de soupape est réalisée avec une zone périphérique (30) s'étendant dans le sens de son axe longitudinal et qui est ajustée de manière étanche dans la zone du siège de soupape (12) ou est écartée de cette dernière en admettant un faible écoulement.

3. Soupape de sécurité selon la revendication 1 ou 2, dans laquelle la première section (30) de la garniture de soupape (20) est réalisée circulaire dans la section transversale.

4. Soupape de sécurité selon l'une quelconque des revendications 1 à 3, dans laquelle la première section (30) de la garniture de soupape (20) est réalisée sous forme de couronne circulaire en forme de cylindre creux.

5. Soupape de sécurité selon l'une quelconque des revendications 1 à 4, dans laquelle une autre couronne circulaire (32) s'étendant radialement vers l'intérieur est disposée au niveau de l'extrémité libre de la première section (30) de la garniture de soupape (20), l'expansion de ladite autre couronne circulaire dans le sens de l'axe longitudinal de la garniture de soupape (20) étant inférieure à celle de la première section (30).

6. Soupape de sécurité selon l'une quelconque des revendications 1 à 5, dans laquelle la seconde section de la garniture de soupape (20) est réalisée sous forme de talons (34) écartés les uns des autres, s'étendant dans le sens de l'axe longitudinal de la garniture de soupape (20).

7. Soupape de sécurité selon la revendication 6, dans laquelle la distance entre les talons (34) dans la zone de la première section (30) est inférieure à celle dans la zone de l'extrémité libre des talons (34).

8. Soupape de sécurité selon la revendication 6 ou 7, dans laquelle les talons (34) présentent de préférence des saillies (36) s'étendant en direction du siège de soupape (12) au niveau de leur extrémité libre et ajustées dans la zone du siège de soupape (12).

9. Soupape de sécurité selon l'une quelconque des revendications 6 à 8, dans laquelle les extrémités libres des talons (34) sont reliées ensemble via une couronne annulaire (38) de préférence ajustée dans la zone du siège de soupape (12).

10. Soupape de sécurité selon l'une quelconque des revendications 1 à 9, dans laquelle la première section (30) de la garniture de soupape (20) se compose d'un autre matériau, de préférence d'un matériau élastique, comme la seconde section (34).

11. Soupape de sécurité selon l'une quelconque des revendications précédentes en vue de l'utilisation dans une soupape de commande, en particulier une valve marche-arrêt ou d'échappement.
